# EUROPEAN PATENT SPECIFICATION

(11) **EP 1 429 537 B1**
(45) Date of publication and mention of the grant of the patent: **02.12.2015**
(21) Application number: 03028225.5
(22) Date of filing: 09.12.2003
(51) Int. Cl.: H04N 1/62

(54) **Image output system and server apparatus**
Bildausgabesystem and Servergerät
Système de sortie d'image et dispositif de serveur

(30) Priority: 11.12.2002 JP 2002359663; 17.11.2003 JP 2003386697
(43) Date of publication of application: 16.06.2004
(73) Proprietor: FUJIFILM Corporation, Minato-ku Tokyo (JP)
(72) Inventor: Kaku, Toshihiko, Ashigarakami-gun Kanagawa 258-8538 (JP)
(74) Representative: Klunker . Schmitt-Nilson . Hirsch

(56) References cited:
- WO-A-02/31754
- US-A1- 2002 136 450
- US-A1- 2002 145 633

## Description

### BACKGROUND OF THE INVENTION

### Field of the Invention

The present invention relates to an image output apparatus according to the preamble of claim 1. Such apparatus is used for outputting image data through correcting inconvenience as to an eye in an image. It also relates to an image output program storage medium storing an image output program, a server apparatus for transmitting the corrected image data to a client apparatus, and an image output system comprising the client apparatus and the server apparatus.

### Description of the Related Art

Hitherto, it is performed that a personal computer and the like is used to apply a desired image processing to a photographic image data obtained through taking a photograph of a subject by a digital camera, so that inconvenience of a photographic image is corrected. Recently, also in a field of a film type of camera, it is widely performed to create a photograph corrected in inconvenience in such a manner that a photographic image recorded on a film is optically read to obtain photographic image data, and the same image processing as that for the digital camera is applied to the photographic image data and thereafter a photographic print is carried out in accordance with the photographic image data. As the above-mentioned image processing, there are known, for example, a processing (cf. for example, Japanese Patent Application Laid Open Gazette TokuKaiHei.7-287312) for correcting red eye and gold eye in which a flash at the time of the flash photography is reflected from the retina, so that eyes come out into red color and gold color; a processing for correcting the eyes-close in which one's eyes are closed by a flash; a processing for correcting a color of the sky and a color of the skin into preferable colors; and a gradation correcting processing. Application of those types of processing to the photographic image data makes it possible to obtain a preferable image (cf. for example, Japanese Patent Application Laid Open Gazette TokuKaiHei.10-233929).

By the way, when a photographic image is confirmed in a personal computer, usually, a software tool referred to as a viewer is used. The viewer has a function of displaying photographic images with enlargement and reduction, and an image table display function wherein a thumbnail sketch, which is smaller in size and the number of pixels than the photographic image, is created, and the thumbnail sketch is displayed on a table display basis. An operator can select a desired function to meet the work. For example, the function of displaying the above-mentioned images with enlargement and reduction is provided for the purpose of confirmation by an operator of details of photographic image, and thus particularly accuracy of display is required. On the other hand, the image table display function using the thumbnail sketch is provided for the purpose of confirmation by an operator of the whole of the photographic image, and thus high-speed display of the image is required rather than accuracy of display. However, according to the processing when the image table display function is selected, the thumbnail sketch is created in accordance with the photographic image, and the above-mentioned red eye correction processing is applied to the thumbnail sketch and thereafter the image is displayed. Actually, this takes a lot of time for the processing up to displaying the image, and thus this would give an operator stress.

This problem would occur not only in a field of photograph, but also generally in fields using an image output apparatus which is required to output images at high speed.

In accordance with the preamble of claim 1, US 2002/0136450 A1 discloses an image output apparatus, in which it is detected whether or not an image to be output has been made by making use of flash light. Information about whether or not flash light has been used can be obtained by setting a "flash tag" in the header of an image file obtained by a digital camera. The flash tag may also be obtained by detecting whether or not there was return light when obtaining an image with the camera. If it is detected that flash light has been used, a correction step is carried out for removing so called red-eye effects.

WO 02/31754 discloses an image output apparatus in accordance with the preamble of claim 1, wherein a process for rendering image data is carried out by modifying certain parameters. Prior to modifying the parameters, it is determined which parameters would change the imaging effect when the rendering is carried out at a resolution differing from the resolution of the input image data. If, for example, rendering is possible on the basis of lower-resolution image data without affecting the quality of the processed image data, high resolution data may be matched to low resolution output data prior to applying the image processing to the lower resolution data.

### SUMMARY OF THE INVENTION

In view of the foregoing, it is an object of the present invention to provide an image output apparatus capable of improving an efficiency for processing when an image is outputted, an image output program storage medium storing an image output program, a server apparatus, and an image output system.

To achieve the above-mentioned object, the present invention provides an image output apparatus comprising the features of claim 1.

In the event that the output quality for image is not so high, for example, a size of an image to be outputted is small, and resolution is low, even if inconvenience as to eyes in the image is corrected, detail of the eyes is unclear because the image is small, or the detail of the eyes is crushed because the pixel of the image is rough. For this reason, there is a possibility that the effect of the correction is little. According to the image output apparatus of the present invention, in the event that the output quality of the image to be outputted is relatively low, the image is outputted without correction of the inconvenience as to eyes. And only in the event that the output quality of the image to be outputted is relatively high, the inconvenience as to eyes greatly effecting to looking at, such as red eye and eye-close, while the area occupying in the image is small, is corrected. Thus, according to the image output apparatus of the present invention, it is possible to improve the efficiency of a series of output processing without performing useless processing when the effect of the correction is little.

In the image output apparatus according to the present invention as mentioned above, it is preferable that the output quality is a number of pixels constituting an image.

It is preferable that in the event that the number of pixels constituting an image is little and the image size is small, the processing time takes precedence over beauty to look at, and non-corrected image is outputted, and in the event that the number of pixels constituting an image is large, beauty to look at takes precedence over the processing time, and an image corrected in inconvenience is outputted.

In the image output apparatus according to the present invention as mentioned above, it is preferable that the output quality is a display time for an image.

In the event that the display time for an image is short, for example, a slide show, a person would not be careful about detail of the image and the effect of correction of the inconvenience is little. For this reason, it is acceptable that an image not corrected in the inconvenience is outputted.

In the image output apparatus according to the present invention as mentioned above, it is preferable that the correcting section applies, as the processing, a red eye correcting processing in which red eyes in the image are detected and corrected.

Of the inconveniences as to the red eye and eye-close, the red eye is hard to be recognized in inconvenience when the output quality is lowered, and thus the effect of the correction of the inconvenience is particularly little in such a case. Accordingly, as to the red eye, in the event that the output quality is relatively low, the red eye is not corrected and the original image is outputted. This makes it possible to improve the efficiency a series of image output.

To achieve the above-mentioned object, the present invention provides an image output program storage medium storing an image output program, the image output program comprising the features of claim 3.

Execution of the image output program as mentioned above in a computer makes it possible to operate the computer as an image output apparatus.

To achieve the above-mentioned object, the present invention provides a server apparatus having the features to claim 4.

For example, in the event that the display ability of the client apparatus is concerned with the monochromatic display, even if an inconvenience such as the red eye occurs in the image, the inconvenience is hard to be recognized. According to the server of the present invention as mentioned above, in the event that the output quality of the client apparatus is less than a predetermined output quality, the useless processing of correcting the inconvenience of the red eye is not carried out, and non-corrected image data is transferred to the client apparatus. Thus, according to the server apparatus of the present invention, it is possible to improve the efficiency of a series of image output processing.

To achieve the above-mentioned object, the present invention provides an image output system comprising the features of claim 5.

According to the image output system of the present invention, the output quality of the client apparatus is obtained. In the event that the output quality is higher than a predetermined quality, the image data after correction is transferred so that the inconvenience takes precedence over beauty to look at. In the event that the output quality is less than the predetermined quality, the image data is transferred without correction of the inconvenience so that the processing time takes precedence over the inconvenience. Thus, according to the image output system of the present invention, the image data is transferred in accordance with the output quality of the client, and whereby it is possible to improve the efficiency of the processing.

### BRIEF DESCRIPTION OF THE DRAWINGS

Fig. 1 is a perspective view of a personal computer to which an embodiment of the present invention is applied.
Fig. 2 is a hardware structural view of the personal computer.
Fig. 3 is a conceptual view showing a CD-ROM storing an image output program stored in an image output program storage medium according to an embodiment of the present invention.
Fig. 4 is a functional block of an image output apparatus in a case where the personal computer serves as an embodiment of an image output apparatus of the present invention.
Fig. 5 is a flowchart useful for understanding a series of procedures in which an image processing is applied to the entered image data in accordance with an output mode and an image is outputted in accordance with the processed image data.
Fig. 6 is a view showing a display screen.
Fig. 7 is a view showing a display screen.
Fig. 8 is a flowchart useful for understanding a series of processing from obtaining an image to outputting the image to a display screen.
Fig. 9 is an explanatory view useful for understanding an image output system to which a third embodiment of the present invention is applied.
Fig. 10 is an explanatory view useful for understanding output quality of the images of the respective output apparatuses shown in Fig. 9.
Fig. 11 is a functional block diagram of the server apparatus shown in Fig. 9.
Fig. 12 is a flowchart useful for understanding a series of processing in which image data is entered to the server apparatus shown in Fig. 9 and the image data is transmitted to the output apparatuses.

### DETAILED DESCRIPTION OF PREFERRED EMBODIMENTS

Embodiments of the present invention will be described with reference to the accompanying drawings.

Here, there will be explained an example in which an image output program stored in image output program storage medium according to an embodiment of the present invention is incorporated into a personal computer, and the image output program causes the personal computer to operate as an image output apparatus according to an embodiment of the present invention.

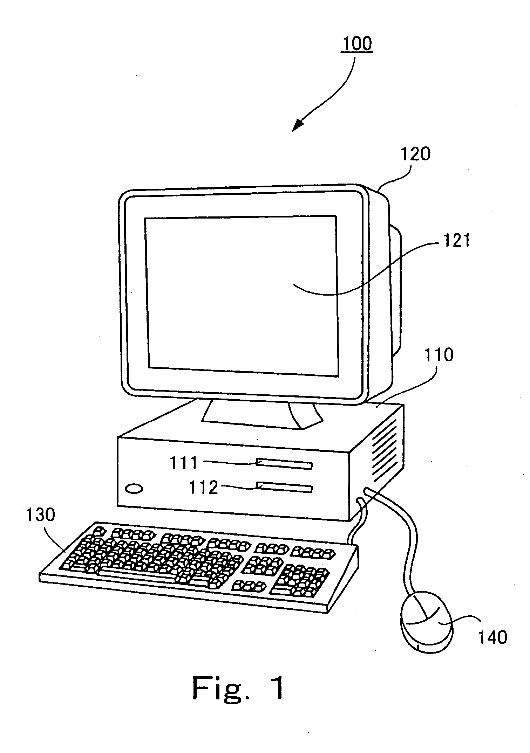

Fig. 1 is a perspective view of a personal computer to which an embodiment of the present invention is applied.

A personal computer 100 comprises, on an external appearance, a main frame unit 110, an image display unit 120 for displaying an image on a display screen 121 in accordance with an instruction from the main frame unit 110, a keyboard 130 for inputting various sorts of information to the main frame unit 110 in accordance with a key operation, and a mouse 140 for inputting an instruction according to, for example, an icon and the like, through designation of an optional position on the display screen 121, the icon and the like being displayed on the position on the display screen 121. The main frame unit 110 has a flexible disk (FD) mounting slot 111 for mounting a flexible disk (FD), and a CD-ROM mounting slot 112 for mounting a CD-ROM.

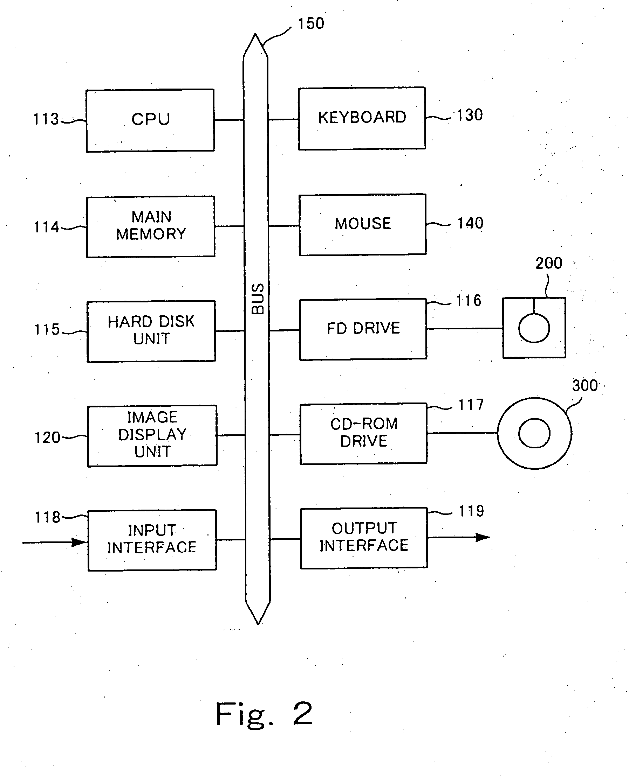

Fig. 2 is a hardware structural view of the personal computer 100.

The main frame unit 110 comprises, as shown in Fig. 2, a CPU 113 for executing a various types of program, a main memory 114 in which a program stored in a hard disk unit 115 is read out and developed for execution by the CPU 113, the hard disk unit 115 for saving various types of programs and data, a flexible disk drive 116 for accessing a flexible disk (FD) 200 mounted thereon, a CD-ROM drive 117 for accessing a CD-ROM 300 mounted thereon, an input interface 118 for receiving image data from an external device such as a scanner, and an output interface 119 for outputting image data to an external device such as a printer. These various types of elements are connected via a bus 150 to the image display unit 120, the keyboard 130 and the mouse 140.

The CD-ROM 300 stores therein an image output program which causes the personal computer 100 to operate as an image output apparatus according to an embodiment of the present invention. The CD-ROM 300 is mounted on the CD-ROM drive 117 so that the image output program, which is stored in the CD-ROM 300, is up-loaded on the personal computer 100 and is stored in the hard disk unit 115. Thus, the personal computer 100 serves as the image output apparatus according to the embodiment of the present invention.

Next, there will be described an image output program, which is executed in the personal computer 100.

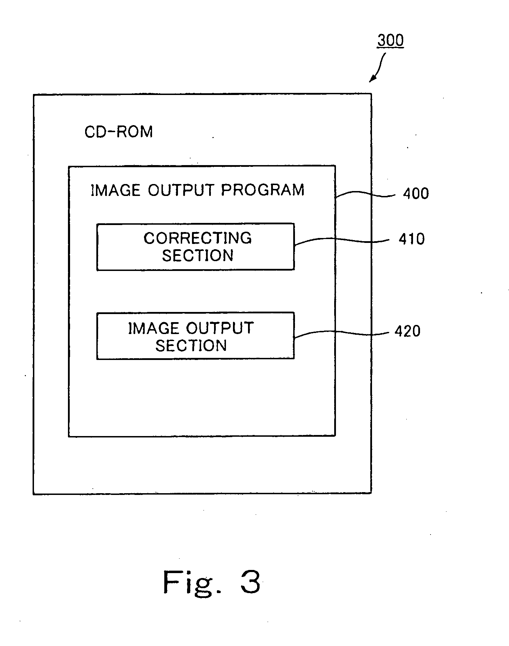

Fig. 3 is a conceptual view showing a CD-ROM storing an image output program stored in an image output program storage medium according to an embodiment of the present invention.

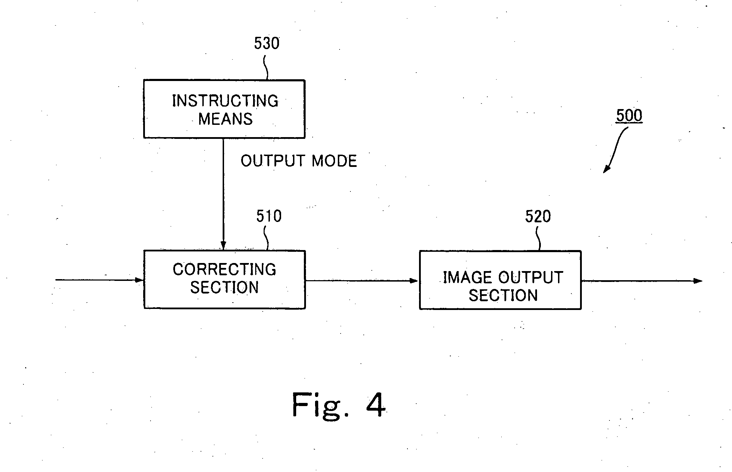

An image output program 400 stored in the CD-ROM 300 comprises a correcting section 410 and an image output section 420. The correcting section 410 corresponds to the example of the correcting section in the image output program stored in the image output program storage medium of the present invention. The image output section 420 corresponds to the example of the image output section in the image output program stored in the image output program storage medium of the present invention. The details of the respective sections of the image output program 400 will be explained in conjunction with the functions of the respective sections of an image output apparatus 500 shown in Fig. 4, which is an embodiment of the image output apparatus of the present invention.

Fig. 4 is a functional block of an image output apparatus in a case where the image output program 400 is installed in the personal computer in Fig. 1, and the personal computer serves as an embodiment of an image output apparatus of the present invention.

The image output apparatus 500, which is shown in Fig. 4, comprises a correcting section 510, an image output section 520, and instruction means 530 including the mouse 140 and the keyboard 130 shown in Fig. 1. When the image output program 400 shown in Fig. 3 is installed in the personal computer 100 in Fig. 1, the correcting section 410 of the image output program 400 constitutes the correcting section 510 in Fig. 4. In a similar fashion, the image output section 420 constitutes the image output section 520.

The image output section 520 receives image data from the correcting section 510 and outputs an output image based on the image data to an external device (not illustrated) such as a printer and the image display unit 120 shown in Fig. 1. The image output section 520 has a full size output mode in which a full size of image, which is the same size as the original image based on the original image data entered to the correcting section 510, is outputted, and a thumbnail output mode in which a thumbnail image, which is less in the number of pixels than the original image and is smaller in size than the original image, is outputted. The image output section 520 corresponds to the example of the image output section in the image output apparatus of the present invention. The full size output mode and the thumbnail output mode correspond to the example of the output mode referred to in the present invention.

The instruction means 530 corresponds on a hardware basis to the mouse 140 and the keyboard 130 shown in Fig. 1. On the display screen 121 shown in Fig. 1, there is prepared beforehand icons for activating the image output apparatus 500. When an operator selects an icon using the instruction means 530, first, of the above-mentioned output modes, the thumbnail output mode is indicated. When the thumbnail output mode is indicated, there is displayed a plurality of thumbnail image on the display screen 121. Next, when the operator selects a desired thumbnail sketch using the instruction means 530, of the above-mentioned output modes, the full size output mode is indicated. The indicated output mode is transmitted to the correcting section 510.

The correcting section 510 receives original image data read by the scanner (not illustrated) and original image data recorded on the FD 200 shown in Fig. 2, and applies image processing to the original image data in accordance with the output mode instructed by the instruction means 530. For example, in the event that the thumbnail output mode is instructed through the instruction means 530, the correcting section 510 applies a size regulation processing to the original image to create a thumbnail sketch smaller than the original image. In the event that an output mode (here the full size output mode), in which an image larger than the original image is outputted, is designated through the instruction means 530, the correcting section 510 detects red eye in the original image and applies a processing of correcting the red eye to the original image data. The image data representative of the image corrected in red eye, or the image data representative of the thumbnail sketch not corrected in red eye is transmitted to the image output section 520. The correcting section 510 corresponds to an example of the correcting section of the image output apparatus of the present invention.

The image output apparatus 500 is basically constructed with the above-mentioned structure. Next, using the image output apparatus 500, there will be explained a series of processing in which an image is outputted to the image display unit 120 in Fig. 1 in accordance with the image data recorded on the FD 200 shown in Fig. 2, and is displayed on the display screen 121.

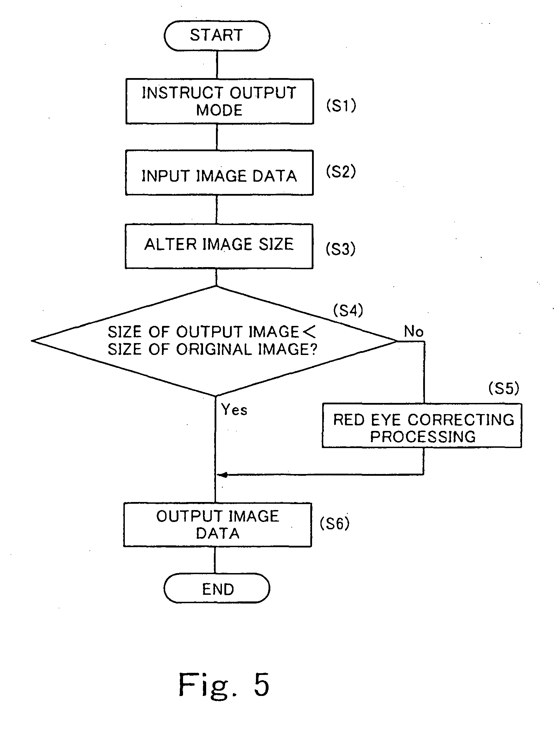

Fig. 5 is a flowchart useful for understanding a series of procedures in which an image processing is applied to the entered image data in accordance with an output mode and an image is outputted in accordance with the processed image data.

On the display screen 121, there is prepared beforehand icons for activating the image output apparatus 500. First, an operator selects an icon using the mouse 140 to activate the image output apparatus 500. When the icon is selected, the thumbnail output mode is instructed through the instruction means 530 shown in Fig. 4, and is transmitted to the correcting section 510 (a step S1).

On the FD 200 shown in Fig. 2, there is recorded a plurality of photographic image data representative of photographic images photographed by a camera. The correcting section 510 obtains, upon receipt of the output mode from the instruction means 530, all the photographic image data recorded on the FD 200 via the FD drive 116 shown in Fig. 2 (a step S2).

Further, the correcting section 510 creates the thumbnail sketch smaller than the photographic image in accordance with the photographic image data entered from the FD 200 (a step S3). A size of the thumbnail sketch as the output image is smaller than the photographic image as the original image (a step S4: Yes), and thus the process goes to a step S6 in which the correcting section 510 shown in Fig. 4 transmits all the image data representative of the thumbnail sketch to the image output section 520.

The image output section 520 transmits all the image data transmitted from the correcting section 510 to the image display unit 120 shown in Fig. 1. Thus, the thumbnail sketch is displayed on the display screen 121 in accordance with the image data transmitted to the image display unit 120.

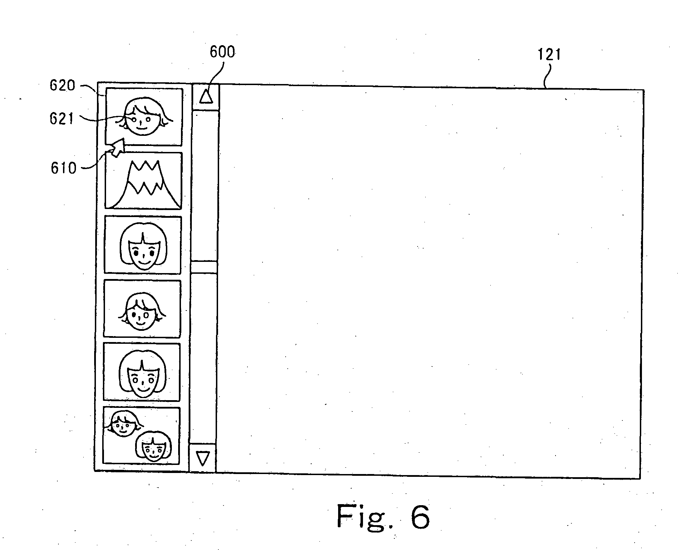

Fig. 6 is a view showing a display screen on which thumbnail sketches are displayed.

On the left side of the display screen 121, there is displayed a plurality of thumbnail sketches 620, and in addition there are displayed a scroll bar 600 for scrolling the thumbnail sketches 620 and a pointer 610 for indicating an image in accordance with an operation of the mouse 140 shown in Fig. 1. There occur red eyes on person's eyes 621 included in the thumbnail sketch 620 appearing on the top, and on some of person's eyes included in other thumbnail sketches. In this case, however, inconvenience due to the red eyes is so inconspicuous, since the thumbnail sketches 620 are small per se and the portions of the person's eyes 621 involved in the red eyes are further smaller. Thus, when the relatively smaller images such as the thumbnail sketches are outputted, output of the images without correction of the red eyes makes it possible to improve efficiency of a series of processing of outputting images, suppressing the processing time.

Next, there will be explained the processing of the image output apparatus 500 from a state that the thumbnail sketches 620 shown in Fig. 6 are displayed on the display screen 121 to a state that the same size of image as the photographic image is displayed on the display screen 121.

An operator selects a desired thumbnail sketch in such a manner that the operator uses the mouse 140 shown in Fig. 1 to set the pointer 610 shown in Fig. 6 at the thumbnail sketch 620, and clicks the mouse 140. When the thumbnail sketch 620 is selected, the instruction means 530 shown in Fig. 4 is used to instruct the full size output mode, so that information of the instructed output mode and the selected thumbnail sketch is transmitted to the correcting section 510 (the step S1).

When the correcting section 510 receives the information of the instructed output mode and the selected thumbnail sketch from the instruction means 530, the correcting section 510 inputs photographic image data associated with the selected thumbnail sketch, of the photographic image data recorded via the FD drive 116 shown in Fig. 2 on the FD 200 (the step S2). A size of the image, which is outputted when the full size output mode is instructed, is equal to the photographic image as the original image, and thus the process omits the step S3 and goes via the step S4 to a step S5 in which the correcting section 510 shown in Fig. 4 corrects the red eyes of the photographic image represented by photographic image data entered through the FD 200 shown in Fig. 2 and the like.

The red eye is a phenomenon that when a person and the like is photographed through emission of a flash at the dark place, a strong light of the flash is projected onto and reflected from a capillary of the eyeground in a state that the pupil of the eye is opened, and as a result, the color of the eyes of the person appearing on the photographic image becomes red.

In order to correct the red eyes, first, a position of the red eye included in the photographic image is detected from the color of the image portions constituting the photographic image represented by the photographic image data and a shape of the image portion. As the method of detecting the red eye, the conventional method can be used.

When the position of the red eye, color and brightness of the red eye are detected. As a result, chroma or saturation of the red eye included in the photographic image is lowered to a predetermined value, so that the color and brightness of the red eye are corrected to color and brightness equal to color and brightness of eyes of the average person, which are preferable as a photograph.

The image data subjected to the series of red eye correcting processing is transmitted to the image output section 520. The image data transmitted to the image output section 520 is transmitted to the image display section 120 shown in Fig. 1 so that an image based on the image data is displayed on the display screen 121.

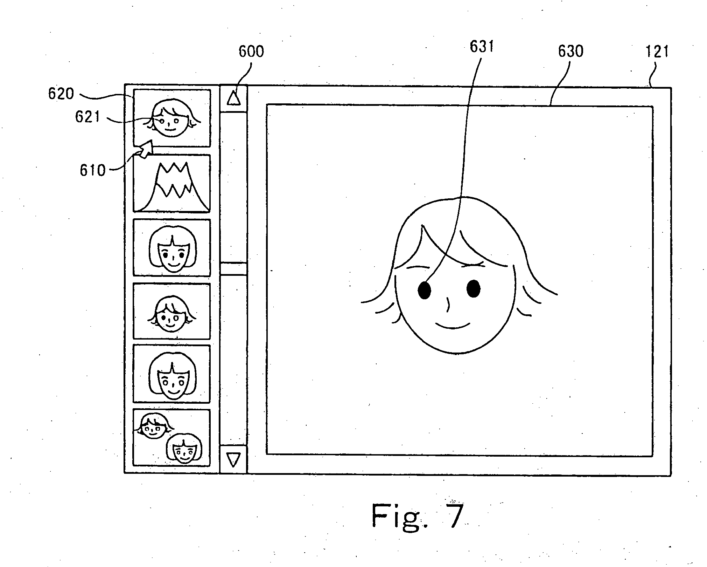

Fig. 7 is a view showing a display screen.

At the right side of the display screen 121, there is displayed an image 630 having the same size as the photographic image, corresponding to the thumbnail sketch 620 on the top indicated by the pointer 610. While the eyes 621 of the person on the thumbnail sketch 620 bring about the red eyes, eyes 631 of the person included in the image 630, which correspond to the eyes 621, is corrected in red eye. In this manner, for example, when it is desired that details of an image are confirmed, output of the corrected red eyes makes it possible to obtain a preferable image.

While the above-mentioned description explains an image output apparatus having a plurality of output modes mutually different from one another in a size (a number of pixels) of an image to be outputted, any one is acceptable for the image output apparatus, which has a plurality of output modes mutually different from one another in output quality. For example, it is acceptable that the image output apparatus has a plurality of output modes mutually different from one another in resolution of an image to be outputted.

According to the present embodiment, since it is determined in accordance with a size of the original image as to whether the red eye correcting processing is needed, in the event that the full size output mode is designated, the red eye correcting processing is always carried out. However, even in the event that the full size output mode is designated, it is acceptable that the red eye correcting processing is omitted in the event that a size of the original image is smaller than a predetermined size. For example, if it were concerned with an image less than 200 pixels in length side, even if the red eye occurs in the image, it would be inconspicuous. And thus in this case, it is preferable that image data is outputted without the red eye correcting processing to improve the processing time.

It is acceptable that need of the red eye correcting processing is determined in accordance with a size of the subject in the image, but not a size of the original image. For example, in a case where an eye of the subject in an image is of 5 pixels or less, and in a case where the interval of both the eyes of the subject is 10 pixels or less, the red eye is be inconspicuous. And thus it is considered that there is no need of the red eye correcting processing. Incidentally, it is possible not only to compute a size of the subject through analysis of the image, but also to estimate the size of the subject from information as to the subject distance applied to photographic image data.

Further, it is acceptable that the present invention is an image output apparatus for outputting an image through a variable power with a designated variable power factor, wherein the image output apparatus has various output modes according to the respective variable power factors. Designation of the variable power factor for an image by an operator makes it possible to designate an output mode wherein an image, which is subjected to the size regulation in accordance with the c, is outputted. In this case, it is acceptable to determine necessity or non-necessity for the red eye correcting processing in accordance with the variable power factor. For example, in a case where the reduction factor of an image is 1/5 times or less, it often happens that the subject in the image is small and thus it is hard to recognize the details of the eye portion. Accordingly, it is acceptable to omit the red eye correcting processing.

With the above description, the explanation for the first embodiment of the present invention will be terminated, and next, there will be explained a second embodiment of the present invention. An image output apparatus according to the second embodiment has the same structure of the image output apparatus according to the first embodiment as shown in Fig. 4, but is different from the image output apparatus according to the first embodiment in display time of the image. Accordingly, hereinafter, there will be explained only different points from the first embodiment referring to Fig. 1 to Fig. 4.

An image output apparatus adopts a slide display system in which a plurality of images is displayed through changing over every designated display time. The correcting section shown in Fig. 4 applies the red eye correcting processing to the entered image in accordance with the display time designated by an operator, or applies no red eye correcting processing to the entered image, and outputs the image to the image output section.

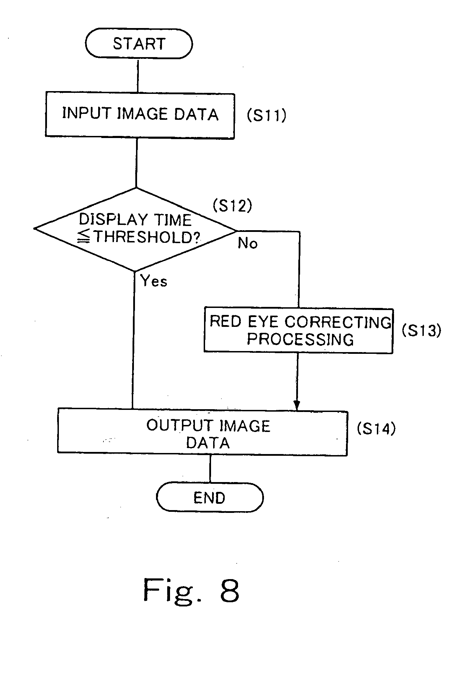

Fig. 8 is a flowchart useful for understanding a series of processing from obtaining an image to outputting the image to a display screen.

The personal computer 100 prepares beforehand a set up screen (not illustrated) for setting up a display time for displaying an image. When the set up screen is displayed on the display screen 121 shown in Fig. 1, an operator uses the instructing means 530 shown in Fig. 4 to designate the display time. The designated display time is transmitted to the correcting section 510. When the designation of the display time is completed, in a similar fashion to that of the step S5 in Fig. 5, all the photographic image data recorded on the FD 200 shown in Fig. 2 are entered to the correcting section 510 shown in Fig. 4 (step S11).

In the event that the display time designated by an operator is not above a predetermined time (here, 2 seconds) (a step S12: YES), the correcting section directly outputs the entered photographic image data to the image output section as it is.

In the event that the display time designated by an operator is above a predetermined time (here, 2 seconds) (the step S12: NO), the correcting section applies the red eye correcting processing, which is the same as the step S5 in Fig. 5, to the entered photographic image data (a step S13). The correcting section outputs the image data subjected to the red eye correcting processing to the image output section.

Upon receipt of the image data from the correcting section, the image output section outputs the image data to the image display unit 120 (a step S14).

The image display screen 121 performs a slide display in which an image is displayed through changing over every designated display time. At that time, in the event that the display time is above the predetermined time (2 seconds), an image, which is corrected in the red eye and thus be nice to look at, is displayed on a slide basis. In the event that the display time is below the predetermined time (2 seconds), an image, which is not corrected in the red eye, is displayed on a slide basis. In a case where a display time is short, a change over of images is quickly performed, and thus it is difficult to confirm the details of the images. Therefore, omission of the useless red eye correcting processing makes it possible to improve the processing time by the corresponding time.

The explanation of the second embodiment of the present invention will be terminated with the description as mentioned above, and next there will be explained the third embodiment of the present invention.

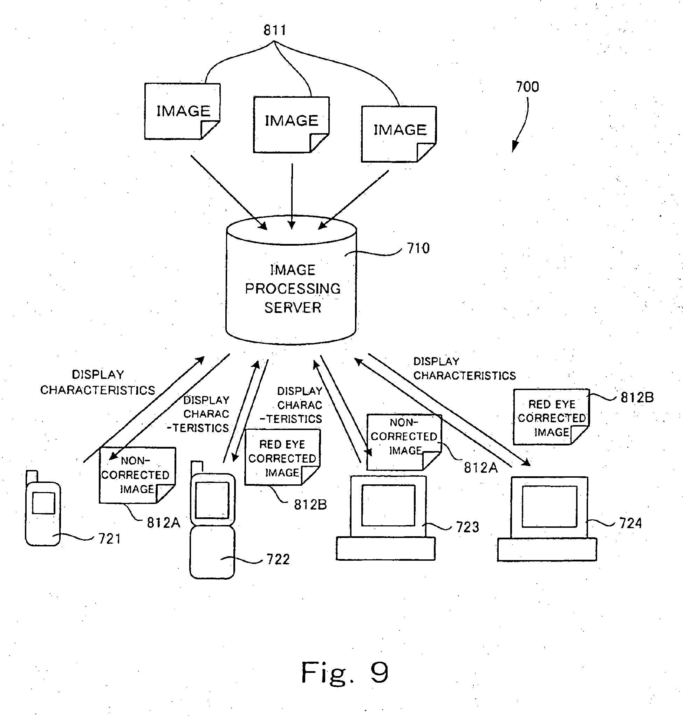

Fig. 9 is an explanatory view useful for understanding an image output system to which the third embodiment of the present invention is applied.

An image output system 700 comprises an image processing server apparatus 710, which is an embodiment of a server apparatus of the present invention, and output apparatuses such as a first portable telephone 721, a second portable telephone 722, a first personal computer (PC) 723, and a second PC 724, which correspond to an example of the client apparatus referred to in the present invention. Those output apparatuses are mutually different from one another in output quality such as display ability for image display, gradation of color and resolution. The image processing server apparatus 710 receives images 811 from scanners (not illustrated) and the like, and transmits to the respective output apparatus any one of non-corrected images 812A before the red eye correction and red eye corrected images 812B after the red eye correction in accordance with the output quality of the associated output apparatus.

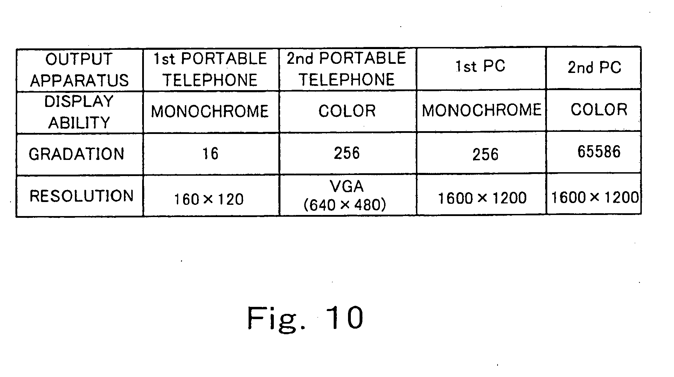

Fig. 10 is an explanatory view useful for understanding output quality of the images of the respective output apparatuses shown in Fig. 9.

The first portable telephone 721 and the first PC 723 shown in Fig. 9 display an image with monochromatic image, even if the color image is transmitted. The second portable telephone 722 and the second PC 724 display an image with a color. As to the gradation and the resolution, the second PC 724, the first PC 723, the second portable telephone 722 and the first portable telephone 721 are higher in their accuracy in the named order.

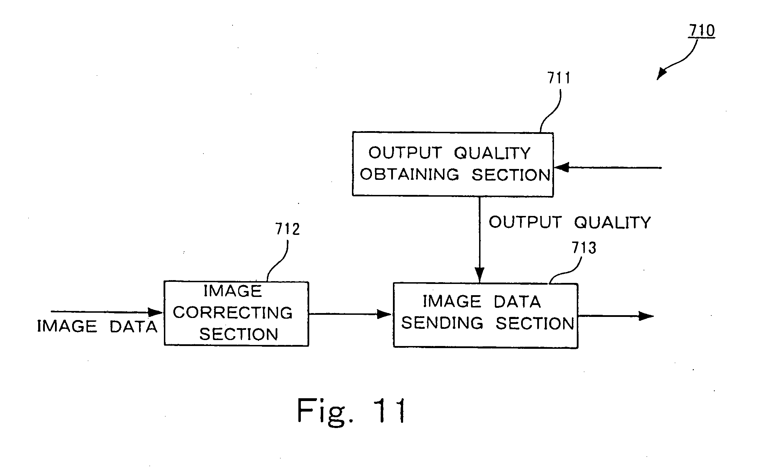

Fig. 11 is a functional block diagram of the server apparatus shown in Fig. 9.

The image processing server 710 comprises an output quality obtaining section 711, an image correcting section 712, and an image data sending section 713.

The output quality obtaining section 711 obtains the output quality as shown in Fig. 10 from the output apparatuses such as the first portable telephone 721, the second portable telephone 722, the first PC 723, and the second PC 724, as shown in Fig. 9. The output quality obtaining section 711 corresponds to an example of the output quality obtaining section referred to in the present invention.

The image correcting section 712 receives original image data representative of images 811, which are read by a scanner (not illustrated) or recorded on the FD 200 shown in Fig. 2. The image correcting section 712 detects inconvenience such as a red eye in the images 811 and corrects the inconvenience, and creates image data after correction representative of red eye corrected images 812B. The image correcting section 712 corresponds to an example of the image correcting section referred to in the present invention.

The image data sending section 713 sends image data after correction representative of red eye corrected image 812B to an output apparatus, when output quality of the output apparatus is higher than a predetermined quality (which will be described latter), and sends original image data representative of non-corrected image 812A to an output apparatus, when output quality of the output apparatus is not higher than the predetermined quality. The image data sending section 713 corresponds to an example of the image data sending section referred to in the present invention.

The image output system of the present embodiment is basically constructed with the structure as mentioned above.

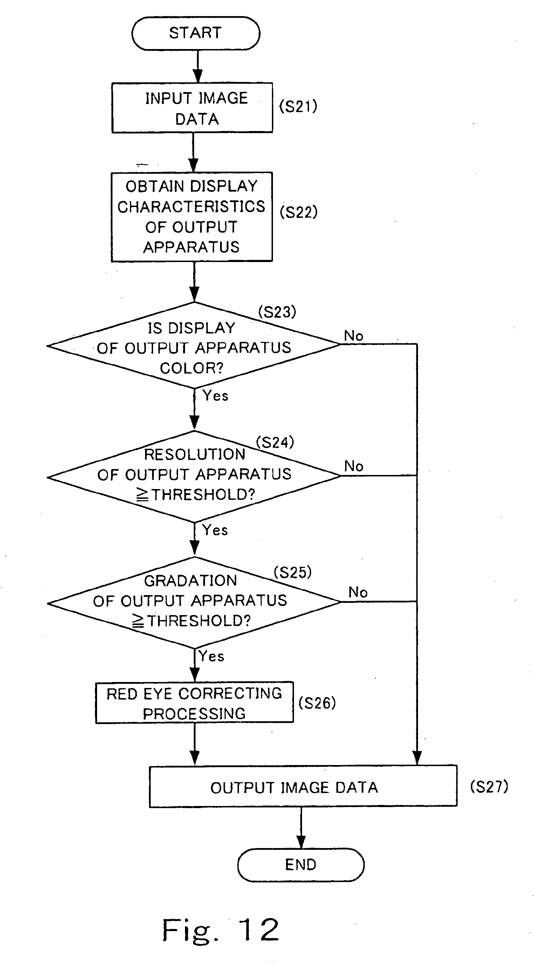

Fig. 12 is a flowchart useful for understanding a series of processing in which image data is entered to the server apparatus shown in Fig. 9 and the image data is transmitted to the output apparatuses.

First, the image correcting section 712 shown in Fig. 11 receives original image data representative of the image 811 (a step S21).

When the image correcting section 712 receives the original image data, the output quality obtaining section 711 obtains the respective output quality of the respective output apparatus shown in Fig. 9 (the first portable telephone 721, the second portable telephone 722, the first PC 723, and the second PC 724 (a step S22). The obtained output qualities are transmitted to the image data sending section 713.

The image data sending section 713 performs the processing in accordance with the output qualities transmitted from the output quality obtaining section 711.

First, in the event that the display ability of an output apparatus is "monochrome" (a step S23: No), the image data sending section 713 issues an instruction to the image correcting section 712 to obtain original image data representative of the non-corrected image 812A from the image correcting section 712, and sends the original image data to the output apparatus (a step S27). When the original image data is sends to the output apparatus, the output apparatus displays the non-corrected image 812A wherein the red eye is not corrected. In the event that the display ability of the output apparatus is "monochrome", even if the red eye occurs in the image, it is not conspicuous. Accordingly, the non-corrected image 812A is transmitted as it is without performing the red eye correcting processing. This makes it possible to improve the efficiency of the processing.

In the event that the display ability of the output apparatus is "color" (the step S23: Yes), the process goes to a step S24.

In the step S24, there is performed a processing based on the resolution of an output apparatus. In the event that the resolution of an output apparatus is less than a predetermined value (here e.g. 640x480 dots) (a step S24: No), the image data sending section 713 sends the original image data to the output apparatus (a step S27). In the event that the resolution of an output apparatus is less, an image is rough in pixel and detail is unclear. Thus, according to the present embodiment, the red eye correcting processing is not carried out and the original image data is sent to the output apparatus. On the other hand, in the event that the resolution of an output apparatus is equal to or more than a predetermined value (here e.g. 640x480 dots) (the step S24: Yes), the process goes to a step S25.

Further, in the event that the gradation of an output apparatus is less than a predetermined value (here e.g. 256 gradations) (the step S25: No), the image data sending section 713 sends the original image data to the output apparatus (the step S27). Also in the event that the gradation of the output apparatus is less, even if the red eye occurs in the image, it is not conspicuous. Thus, according to the present embodiment, the original image data is sent to the output apparatus. In the event that the gradation of the output apparatus is not less than a predetermined gradation value (256 gradations) (the step S25: Yes), the image data sending section 713 issues an instruction of the red eye correction to the image correcting section 712.

The image correcting section 712 applies the red eye correcting processing similar to the step S5 in Fig. 5 to the original image data (a step S26). The image data after correction representative of the red eye corrected image 812B is transmitted to the image data sending section 713.

The image data sending section 713 receives the image data after correction from the image correcting section 712, and sends the image data after correction to the output apparatus. At that time, the output apparatus displays the red eye corrected image 812B. In case of an output apparatus high in output quality, the red eye in an image is conspicuous. And thus, according to the present embodiment, the image data after correction subjected to the red eye correcting processing is sent to the output apparatus.

According to the flowchart in Fig. 12, since the first portable telephone 721 and the first PC 723 are of monochrome in the display ability, the processing time takes precedence over beauty to look at, and the non-corrected image 812A is transmitted. Since the second portable telephone 722 and the second PC 724 are of color display, and are of not less than a predetermined value (640x480 dots) in resolution and not less than a predetermined value (256 gradations) in gradation, and thus the output quality is high, beauty to look at takes precedence over the processing time, and the red eye corrected image 812B is transmitted.

In this manner, according to the present embodiment, the non-corrected image 812A or the red eye corrected image 812B is transmitted in accordance with the output quality of the output apparatus. This makes it possible to contribute to enhancement of the efficiency of the processing.

While the above description explains an image output apparatus in which an image based on image data is outputted to an image display apparatus so as to be displayed on a display screen, it is acceptable that the image output apparatus of the present invention is, for example, to output an image based on image data to a printing machine for photography so that the image is printed on an index print corresponding to the thumbnail sketch or the usual photographic print.

Further, while the above description explains an example of correction of the red eye in the image represented by the image data, any one is acceptable, as an image output apparatus, a server apparatus, and an image output system of the present invention, which correct inconvenience of eyes in the image, for example, eye-close in the image.

Furthermore, while the above description explains an example of a correcting section for correcting a predetermined inconvenience as to eyes in the image, it is acceptable that the correcting section referred to in the present invention performs not only the processing for correcting the inconvenience as to eyes such as red eye, but also for example a processing for correcting color of sky and color of skin to a preferable color, or a gradation correcting processing.

Still further, while the above description explains an example of two output qualities such as a size (the number of pixels) of an image to be outputted and a display time of the image, it is acceptable that the output quality referred to in the present invention is a combination of those two output qualities.

Still furthermore, while the above description explains an example in which in the event that the output quality of the client apparatus and the output mode is relatively low, the image correcting processing is not applied to the image data, it is acceptable that an image output apparatus, a server apparatus, and an image output system of the present invention apply the image correcting processing other than the processing for correcting a predetermined inconvenience as to eyes, such as the above-mentioned gradation correcting processing, also to image data for a client apparatus and the output mode in which the output quality is relatively low. It is acceptable that the image correcting processing other than the processing for correcting a predetermined inconvenience as to eyes is carried out only when the output quality is relatively high, or is carried out in accordance with a degree of the output quality.

As mentioned above, according to the present invention, it is possible to provide an image output apparatus, an image output program storage medium storing an image output program, a server apparatus, and an image output system, which are capable of improving an efficiency of processing when an image is outputted.

While the present invention has been described with reference to the particular illustrative embodiments, it is not to be restricted by those embodiments but only by the appended claims. It is to be appreciated that those skilled in the art can change or modify the embodiments without departing from the scope of the present invention.

## Claims

1. An image output apparatus (500) comprising:
an image output section (520) that outputs an image in accordance with received image data, the image output section having a plurality of output modes which can be selected by a client and which are mutually different from one another in output quality; and
a correcting section (510) that transfers image data to the image output section (520) upon application of processing of detection and correction of a predetermined inconvenience as to eyes in the image represented by the image data to the image data, or transfers image data to the image output section (520) without application of processing of detection and correction of the predetermined inconvenience to the image data, **characterized in that** said correction section (510) is adapted to carry out said transfer upon said application of processing when the selected output mode of the image output section (520) corresponds to a relatively high output quality and to carry out the transfer without said application of processing when the selected output mode corresponds to a relatively low output quality, wherein the output quality is a number of pixels constituting an image, or wherein the output quality is a display time for an image.

2. An image output apparatus according to claim 1, wherein the correcting section (510) applies, as the processing, a red eye correcting processing in which red eyes in the image are detected and corrected.

3. An image output program storage medium (300) storing an image output program, the image output program comprising:
an image output section (420) that outputs an image in accordance with received image data, the image output section (420) having a plurality of output modes which can be selected by a client and which are mutually different from one another in output quality; and
a correcting section (410) that transfers image data to the image output section (420) upon application of processing of detection and correction of a predetermined inconvenience as to eyes in the image represented by the image data to the image data, or transfers image data to the image output section (420) without application of processing of detection and correction of the predetermined inconvenience to the image data, **characterized in that** said correction section (410) is adapted to carry out said transfer upon said application of processing, when the selected output modes of the image output section (420) corresponds to a relatively high output quality, and to carry out the transfer about said application of processing when the selected output mode corresponds to a relatively low output quality, wherein the output quality is a number of pixels constituting an image, or wherein the output quality is a display time for an image.

4. A server apparatus (710) that transmits received image data to a client apparatus (721-724) that outputs an image in accordance with the received image data, the server apparatus (710) comprising:
an image correcting section (712) that detects and corrects a predetermined inconvenience as to eyes in the image represented by the image data;
an output quality obtaining section (711) that obtains output quality of an image of the client apparatus (721-724); and
an image data transmission section (713) that transfers image data corrected in the inconvenience in the image correcting section to the client apparatus (21-724), or transfers image data not corrected in the inconvenience to the client apparatus (721-724), **characterized in that** the image data transmission section (711) transfers said corrected image data when the obtained output quality is relatively high and transfers the not-corrected image data when the obtained output quality is relatively low.

5. An image output system (700) comprising a plurality of client apparatuses (721-724) each outputting an image in accordance with received image data, and the server apparatus (710) according to claim 4, that transmits image data to the client apparatuses (721-724),
wherein the plurality of client apparatuses (721-724) include a plurality of types of client apparatuses that output images having output qualities mutually different from one another.

## Patentansprüche

1. Bildausgabevorrichtung (500), umfassend:
einen Bildausgabeteil (520), der ein Bild entsprechend empfangenen Bilddaten ausgibt, wobei der Bildausgabeteil mehrere Ausgabemodi aufweist, die von einem Kunden ausgewählt werden können, und die sich voneinander in der Ausgabequalität unterscheiden; und
einen Korrekturteil (510), der Bilddaten zu dem Bildausgabeteil (520) überträgt im Anschluss an die Anwendung einer Verarbeitung des Nachweisens und Korrigierens einer vorbestimmten Augen-Unzulänglichkeit in dem durch die Bilddaten repräsentierten Bild auf die Bilddaten, oder Bilddaten zu dem Bildausgabeteil (520) transferiert ohne Anwenden der Verarbeitung des Nachweisens und Korrigierens der vorbestimmten Unzulänglichkeit auf die Bilddaten, **dadurch gekennzeichnet, dass** der Korrekturteil (510) dazu ausgebildet ist, den Transfer durchzuführen im Anschluss an die Anwendung der Verarbeitung, wenn der ausgewählte Ausgabemodus des Bildausgabeteils (520) einer relativ hohen Ausgabequalität entspricht, und den Transfer ohne die Anwendung der Verarbeitung auszuführen, wenn der ausgewählte Ausgabemodus einer relativ geringen Ausgabequalität entspricht, wobei die Ausgabequalität eine Anzahl von ein Bild darstellenden Pixeln ist, oder wobei die Ausgabequalität eine Anzeigezeit für ein Bild ist.

2. Bildausgabevorrichtung nach Anspruch 1, bei der der Korrekturteil (510) als Verarbeitung eine Rotaugen-Korrekturverarbeitung anwendet, bei der rote Augen in dem Bild nachgewiesen und korrigiert werden.

3. Bildausgabeprogramm-Speichermedium (300), das ein Bildausgabeprogramm speichert, welches umfasst:
einen Bildausgabeteil (420), der ein Bild entsprechend empfangenen Bilddaten ausgibt, wobei der Bildausgabeteil mehrere Ausgabemodi aufweist, die von einem Kunden ausgewählt werden können, und die sich voneinander in der Ausgabequalität unterscheiden; und
einen Korrekturteil (410), der Bilddaten zu dem Bildausgabeteil (420) überträgt im Anschluss an die Anwendung einer Verarbeitung des Nachweisens und Korrigierens einer vorbestimmten Augen-Unzulänglichkeit in dem durch die Bilddaten repräsentierten Bild auf die Bilddaten, oder Bilddaten zu dem Bildausgabeteil (420) transferiert ohne Anwenden der Verarbeitung des Nachweisens und Korrigierens der vorbestimmten Unzulänglichkeit auf die Bilddaten, **dadurch gekennzeichnet, dass** der Korrekturteil (410) dazu ausgebildet ist, den Transfer durchzuführen im Anschluss an die Anwendung der Verarbeitung, wenn der ausgewählte Ausgabemodus des Bildausgabeteils (420) einer relativ hohen Ausgabequalität entspricht, und den Transfer ohne die Anwendung der Verarbeitung auszuführen, wenn der ausgewählte Ausgabemodus einer relativ geringen Ausgabequalität entspricht, wobei die Ausgabequalität eine Anzahl von ein Bild darstellenden Pixeln ist, oder wobei die Ausgabequalität eine Anzeigezeit für ein Bild ist.

4. Servervorrichtung (710), die empfangene Bilddaten zu einer Kundenvorrichtung (721-724) sendet, welche ein Bild entsprechend den empfangenen Bilddaten ausgibt, wobei die Servervorrichtung (710) umfasst:
einen Bildkorrekturteil (712), der eine vorbestimmte Augen-Unzulänglichkeit in dem durch die Bilddaten repräsentierten Bild nachweist und korrigiert;
einen Ausgabequalitäts-Ermittlungsteil (711), der eine Ausgabequalität eines Bilds der Kundenvorrichtung (721-724) ermittelt; und
einen Bilddaten-Sendeteil (713), der bezüglich der Unzulänglichkeit in dem Bildkorrekturteil korrigierte Bilddaten zu der Kundenvorrichtung (721-724) transferiert, oder der bezüglich der Unzulänglichkeit nicht korrigierte Bilddaten zu der Kundenvorrichtung (721-724) überträgt, **dadurch gekennzeichnet, dass** der Bilddatensendeteil (711) die korrigierten Bilddaten transferiert, wenn die ermittelte Ausgabequalität relativ hoch ist, und die nicht-korrigierten Bilddaten transferiert, wenn die ermittelte Ausgabequalität relativ gering ist.

5. Bildausgabesystem (700), umfassend mehrere Kundenvorrichtungen (721-724), die jeweils ein Bild entsprechend empfangenen Bilddaten ausgeben, und die Servervorrichtung (710) nach Anspruch 4, die Bilddaten zu den Kundenvorrichtungen (721-724) überträgt,
wobei die mehreren Kundenvorrichtungen (721-724) mehrere Typen von Kundenvorrichtungen enthalten, die Bilder mit voneinander verschiedenen Ausgabequalitäten ausgeben.

## Revendications

1. Appareil de sortie d'image (500), comprenant :
une partie de sortie d'image (520) qui produit une image en fonction de données image reçues, la partie de sortie d'image présentant une pluralité de modes de sortie qui peuvent être sélectionnés par un client et qui sont différents les uns des autres en termes de qualité de sortie, et
une partie de correction (510) qui transfère des données image vers la partie de sortie d'image (520) lors de l'application d'un traitement de détection et de correction d'un inconvénient prédéterminé quant aux yeux dans l'image représentée par les données image sur les données image, ou qui transfère des données image vers la partie de sortie d'image (520) sans application de traitement de détection et de correction de l'inconvénient prédéterminé sur les données image, **caractérisé en ce que** ladite partie de correction d'image (510) est apte à exécuter ledit transfert lors de ladite application de traitement lorsque le mode de sortie sélectionné de la partie de sortie d'image (520) correspond à une qualité de sortie relativement élevée, et à exécuter le transfert sans ladite application de traitement lorsque le mode de sortie sélectionné correspond à une qualité de sortie relativement faible, dans lequel la qualité de sortie est un nombre de pixels constituant une image, ou dans lequel la qualité de sortie est un temps d'affichage pour une image.

2. Appareil de sortie d'image selon la revendication 1, dans lequel la partie de correction (510) applique, pour le traitement, un traitement de correction yeux rouges dans lequel les yeux rouges sur l'image sont détectés et corrigés.

3. Support de stockage de programme de sortie d'image (300) stockant un programme de sortie d'image, le programme de sortie d'image comprenant :
une partie de sortie d'image (420) qui produit une image en fonction de données image reçues, la partie de sortie d'image (420) présentant une pluralité de modes de sortie qui peuvent être sélectionnés par un client et qui sont différents les uns des autres en termes de qualité de sortie, et
une partie de correction (410) qui transfère des données image vers la partie de sortie d'image (420) lors de l'application d'un traitement de détection et de correction d'un inconvénient prédéterminé quant aux yeux dans l'image représentée par les données image sur les données image, ou qui transfère des données image vers la partie de sortie d'image (420) sans application de traitement de détection et de correction de l'inconvénient prédéterminé sur les données image, **caractérisé en ce que** ladite partie de correction d'image (410) est apte à exécuter ledit transfert lors de ladite application de traitement, lorsque les modes de sortie sélectionnés de la partie de sortie d'image (420) correspondent à une qualité de sortie relativement élevée, et à exécuter le transfert concernant ladite application de traitement, lorsque le mode de sortie sélectionné correspond à une qualité de sortie relativement faible, dans lequel la qualité de sortie est un nombre de pixels constituant une image, ou dans lequel la qualité de sortie est un temps d'affichage pour une image.

4. Appareil de serveur (710) qui transmet des données image reçues à un appareil client (721-724) qui produit une image en fonction des données image reçues, l'appareil serveur (710) comprenant :
une partie de correction d'image (712) qui détecte et corrige un inconvénient prédéterminé quant aux yeux dans l'image représentée par les données image ;
une partie d'obtention de qualité de sortie (711) qui obtient une qualité de sortie d'une image de l'appareil client (721-724), et
une partie de transmission de données image (713) qui transfère des données image corrigées quant à l'inconvénient dans la partie de correction d'image vers l'appareil client (21-724), ou qui transfère des données image non corrigées quant à l'inconvénient vers l'appareil client (721-724), **caractérisé en ce que** la partie de transmission de données image (711) transfère lesdites données image corrigées lorsque la qualité de sortie obtenue est relativement élevée, et transfère les données image non corrigées lorsque la qualité de sortie obtenue est relativement faible.

5. Système de sortie d'image (700) comprenant une pluralité d'appareils clients (721-724), chacun produisant une image en fonction des données image reçues, et l'appareil serveur (710) selon la revendication 4, lequel transmet des données image aux appareils clients (721-724),
dans lequel la pluralité d'appareils clients (721-724) inclut une pluralité de types d'appareils clients qui produisent des images présentant des qualités de sortie différentes les unes des autres.
